# EUROPÄISCHE PATENTSCHRIFT

(11) **EP 1 803 261 B1**
(45) Veröffentlichungstag und Bekanntmachung des Hinweises auf die Patenterteilung: **12.11.2008**
(21) Anmeldenummer: 05797012.1
(22) Anmeldetag: 19.09.2005
(51) Int. Cl.: H04L 12/56

(54) **VERFAHREN ZUR FEHLERERKENNUNG IN EINEM PAKETBASIERTEN NACHRICHTENVERTEILSYSTEM**
METHOD FOR ERROR DETECTION IN A PACKET-BASED MESSAGE DISTRIBUTION SYSTEM
PROCEDE DE DETECTION D'ERREURS DANS UN SYSTEME DE DISTRIBUTION D'INFORMATIONS PAR PAQUETS

(30) Priorität: 20.10.2004 DE 102004051167
(43) Veröffentlichungstag der Anmeldung: 04.07.2007
(73) Patentinhaber: Nokia Siemens Networks GmbH & Co. KG, 81541 München (DE)
(72) Erfinder: HÖF, Jonas, 81739 München (DE); LÖBIG, Norbert, 64291 Darmstadt (DE); TEGELER, Jürgen, 82377 Penzberg (DE); TINNACHER, Michael, A-8580 Köflach (AT); WALLNER, Dieter, A-8052 Graz (AT)
(86) Internationale Anmeldenummer: PCT/EP2005/054649
(87) Internationale Veröffentlichungsnummer: WO 2006/042776

(56) Entgegenhaltungen:
- WO-A-01/63850
- US-A1- 2002 133 756
- US-A1- 2003 179 742
- US-B1- 6 581 166

## Beschreibung

Die Erfindung betrifft ein Verfahren zur Fehlererkennung in einem paketbasierten Nachrichtenverteilsystem, wobei Nachrichten über mehrere Knoten und weitere Systemkomponenten verteilt werden und jeder Knoten mindestens zwei adressierbare Schnittstellen aufweist, und zur Systemsicherheit die Nachrichtenverteilerwege redundant aufgebaut sind und beim Ausfall einer oder mehrerer Verbindungen der Knoten und/oder Systemkomponenten im Nachrichtenverteilsystem Redundanzwege vorhanden sind.

In der Veröffentlichung US-B1-6-581 166 (Hirst Michael et al, 17.06.2003) ist ein Verfahren zur Fehlererkennung und Wiederherstellung beschrieben, welches zur Bereitstellung von Fehlertoleranz duale unabhängige Netze nutzt. Ein primäres und ein alternatives Netz werden so genutzt, dass die Kommunikationen für einen bestimmten Computer über das per Voreinstellung für diesen Computer bevorzugte Netz stattfinden. Mit Erkennung eines Fehlers wird eine Routingtabelle in dem erkennenden Computer geändert, so dass das voreingestellte Netz des den Fehler erkennenden Computers auf das zuvor nicht voreingestellte Netz gesetzt wird. Zusätzlich wird ein Gateway-Paket übertragen, welches es erlaubt, dass andere Netz Computer ihre Routingtabellen modifizieren, um mit dem den Fehler erkennenden Computer über sein gegenwärtig voreingestelltes Netz zu kommunizieren.

Die korrekte Funktion von redundant aufgebauten Kommunikationseinrichtungen, zum Beispiel eines IP basierten Nachrichtenverteilsystems, hängt auch von der richtigen Verkabelung ab, zum Beispiel der Verkabelung der Switche und der Kommunikationsknoten untereinander. Unerkannte Fehler in einem für hohe Verfügbarkeit ausgelegten redundanten Nachrichtenverteilsystem können mit einem Hardwareausfall zum Verlust von stabilen Calls, Betriebseinschränkungen und Nichterreichbarkeiten in einem Kommunikationssystem führen. Falschverkabelung und/oder fehlerhafte Konfiguration der Komponenten können bei Neu- und Erweiterungsbaumaßnahmen des Kommunikationssystems zu Verlust der Einstelldaten führen. Nun kann es sein, dass aufgrund der Systemredundanz trotz falscher Verkabelung oder eines physischen Kabelfehlers vor dem Eintritt eines Ausfalls einer Systemkomponente die angebotenen Dienste reibungslos funktionieren. Der Effekt der falschen Verkabelung oder des physischen Kabelfehlers würde sich dann erst beim Ausfall des ersten Verbindungsweges zwischen zwei Punkten auswirken, indem dann kein Redundanzweg geschaltet werden kann. Das heißt ein solcher Verkabelungsfehler führt dazu, dass tatsächlich zumindest auf einer Strecke keine Wege-redundanz vorhanden ist, obwohl diese vermeintlich im Redundanzsystem konzipiert ist. Die nicht vorhandene Redundanz wird bisher nicht automatisch erkannt. Verkabelungsfehler können so dazu führen, dass ein System seine spezifizierte Ausfallsicherheit, die es im Idealfall auch erreichen würde, im praktischen Betrieb nicht erreicht. Sie stellen damit ein erhebliches Risiko für die Zuverlässigkeit von Kommunikationseinrichtungen dar.

Bei bisher bekannten redundant aufgebauten Nachrichtenverteilsystemen musste man sich darauf verlassen, dass beim Aufbau des Systems gewissenhaft gearbeitet wurde und keine (Verkabelungs-)Fehler eingearbeitet wurden. Eventuell vorhandene Fehlkonfigurationen, ein physische (Verkabelungs-)Fehler oder fehlende Redundanzwege, äußerten sich erst bei einem auftretenden Ausfall einer Systemkomponente, indem die vermeintliche Systemredundanz dann nicht gegeben ist. Dieser unsichere Zustand beziehungsweise dieser Unsicherheitsfaktor ist unter dem Gesichtspunkt der Zuverlässigkeit des Systems nicht besonders befriedigend.

Es ist daher Aufgabe der Erfindung, ein Verfahren zur Fehlererkennung in einem paketbasierten Nachrichtenverteilsystem vorzustellen, welches bereits vor dem Eintritt eines Ausfalls einer Systemkomponente, eventuell vorhandene Fehlkonfigurationen oder physische Fehler, zum Beispiel Verkabelungsfehler, oder nicht vorhandene Redundanzfähigkeit des Nachrichtenverteilsystems erkennt.

Diese Aufgabe wird durch die Merkmale des unabhängigen Patentanspruches 1 gelöst. Vorteilhafte Weiterbildungen der Erfindung sind Gegenstand untergeordneter Ansprüche.

Die Erfinder haben erkannt, dass es günstig ist, wenn die im Nachrichtenverteilsystem vorhandenen Knoten, vorzugsweise Computer, den logischen Aufbau der vorgesehenen Topologiestruktur des Nachrichtenverteilsystems kennen, in die sie eingebunden sein sollen. Dieser Aufbau sollte administrierbar sein, das heißt von einem Systemüberwacher verändert werden können, damit die Topologie im laufenden Betrieb des Knotens geändert werden kann. Durch Kommunikationstests der Knoten untereinander und mit den benachbarten Systemkomponenten können die Knoten die Netzwerkadressen der benachbarten Knoten und Systemkomponenten bestimmen. Weiterhin haben sie die Möglichkeit, zwischengelagerte Netzelemente, welche nur der Weiterleitung von Nachrichten dienen, anzusprechen und abzufragen. Diese Informationen reichen bereits, den logischen Aufbau der Topologie zu verifizieren. Falls den überwachenden Knoten auch gewährt wird, einzelne Ports der zwischengelagerten Netzelemente abzuschalten, können auf diese Weise auch Routinetests zur Überprüfung der Redundanzeigenschaften des Systems angestoßen werden.

Fehler in der Verkabelung beziehungsweise nicht vorhandene Redundanzfähigkeit im Vergleich zum Topologiebild im kontrollierenden Knoten können erkannt und optional alarmiert werden. Auf diese Weise kann das Bedienpersonal des Nachrichtenverteilsystems auf eine nicht vorhandene Redundanz und/oder einen physischen Fehler aufmerksam gemacht werden, bevor diese/dieser erst beim Verbindungsausfall einer Systemkomponente erkannt wird.

Demgemäss schlagen die Erfinder vor, das bekannte Verfahren zur Fehlererkennung in einem paketbasierten Nachrichtenverteilsystem, wobei Nachrichten über mehrere Knoten und weitere Systemkomponenten verteilt werden und jeder Knoten mindestens zwei adressierbare Schnittstellen aufweist, und zur Systemsicherheit die Nachrichtenverteilerwege redundant aufgebaut sind und beim Ausfall einer oder mehrerer Verbindungen der Knoten und/oder Systemkomponenten im Nachrichtenverteilsystem Redundanzwege vorhanden sind, dahingehend zu verbessern, dass die Topologie des Nachrichtenverteilsystems den Knoten bekannt ist und die Knoten durch Kommunikationstests die Erreichbarkeit der weiteren Knoten verifizieren und zwischengelagerte Systemkomponenten über vorhandene Schnittstellen bezüglich deren Verbindungsstatus mit anderen Knoten und/oder Systemkomponenten abfragen und eventuell vorhandene Fehlkonfigurationen, physische Fehler und/oder fehlende Redundanzwege des Nachrichtenverteilsystems signalisieren.

Hierdurch werden physische Fehler, wie Verkabelungsfehler, die zum Verlust der Wege-Redundanz führen, sehr schnell erkannt und können in aller Regel behoben werden, bevor sie zum Verbindungsausfall führen. Im Normalfall wird so eine Reparatur bereits bei der Inbetriebnahme eines Systems erfolgen, bevor es seinen regulären Betrieb aufnimmt. Somit sollte das oben beschriebene Szenario im laufenden Betrieb überhaupt nicht auftreten. Aber auch Konfigurationsfehler können auf diese Weise erkannt und durch die Systemadministrierbarkeit schnell behoben werden.

So kann mit dem neuen Verfahren der Kommunikationsweg zwischen zwei ATM basierten Knoten mitlaufend geprüft werden. Bei negativem Prüfergebnis kann die Durchschalteinformation vorgelagerter Einrichtungen des Nachrichtenverteilsystems abgefragt werden. Schnittstellen können zu Prüfungszwecken abund eingeschaltet werden sowie Haltespeicherinformation in korrigierender Weise wieder eingebracht werden. Dies alles ist aufgrund der Topologieinformation, welche in den über das Nachrichtenverteilsystem kommunizierenden Knoten vorhanden ist, nach dem erfindungsgemäßen Verfahren möglich.

Mit dem beschriebenen Überwachungsverfahren kann eine Destabilisierung des Systems aufgrund von Verkabelungsfehlern praktisch ausgeschlossen werden. Dies erhöht die Zuverlässigkeit von Systemen im realen Einsatz, weil eine Lücke zwischen theoretisch erreichbarer Verfügbarkeit und der tatsächlich vor Ort erreichten Verfügbarkeit geschlossen wird. Ein Risiko, das schwer kalkulierbar ist, wird durch die Erfindung eliminiert. Ein weiterer Vorteil des neuen Verfahrens ist, dass es ohne Implementierung von zusätzlicher neuer Hardware bereits mit der vorhandenen Hardware des Nachrichtenverteilsystems durchführbar ist.

Das Verfahren eignet sich beispielsweise auch bei IP basierten Nachrichtenverteilsystemen, vorzugsweise bei einem LAN oder einem VLAN, wobei jedem Knoten mindestens zwei eineindeutige Netzwerkadressen, vorzugsweise IP- und/oder MAC-Adressen, zugeordnet werden.

Es ist günstig, wenn die Daten, die die Topologie beschreiben, über eine Bedienschnittstelle verändert werden. Somit kann die Topologie des Nachrichtenverteilsystems einfach verändert werden.

Eine mögliche Variante des Verfahren sieht vor, vorhandene Fehlkonfigurationen des Nachrichtenverteilsystems nach Erkennung automatisch zu korrigieren. Zum Beispiel kann im neuen Verfahren im Falle einer physischen Falschverkabelung eines oder mehrerer Knoten und/oder der Systemkomponenten alternativ zur Neuverdrahtung von Hand die Konfigurationsdaten des Nachrichtenverteilsystems modifiziert werden. Hierdurch kann beispielsweise eine äquivalente Cross Link Funktionalität, also ein Kommunikationsweg zwischen vorgelagerten Einrichtungen, zum Beispiel Switches, verfügbar gemacht werden.

Der Verbindungsstatus der Knoten und/oder Systemkomponenten ist meist in Verbindungstabellen (= Bridge-Tables) hinterlegt. Im Verfahren ist es dann günstig, wenn die Knoten den Zustand anzeigen, wenn sie ihre Netzwerkadressen in den Verbindungstabellen benachbarten Systemkomponenten gar nicht oder mehrfach vorfinden. Sind die Netzwerkadressen eines Knotens gar nicht oder mehrfach in den Verbindungstabellen benachbarten Systemkomponenten vorhanden, so kann ein Redundanzweg nicht geschaltet werden.

Bei Bedarf, vorzugsweise bei Wartungsarbeiten, Um- und Erweiterungsbaumaßnahmen, können die Funktionen der Signalisierung und Änderung der Fehlkonfiguration deaktiviert werden. Hierdurch werden unerwünschte Alarme des Systems bei Wartungsarbeiten unterdrückt.

Ergänzend dazu, können bei Bedarf einzelne Knoten und/oder zwischengelagerte Systemkomponenten abgeschaltet werden. Diese Option ist zur Verifizierung der gewünschten Topologie und damit einhergehenden Verschaltung und Konfiguration vorgesehen. Sofern die Fehler nur konfigurativ bedingt sind, können diese selbsttätig beseitigt werden.

In einer besonderen Ausführung des Verfahrens, können auf den Knoten Anwendungen ausgeführt werden, die die Bridge-Tables der benachbarten Systemkomponenten und die darin tatsächlich vorhandenen Netzwerkadressen überprüfen. Diese Anwendungen können unabhängig von den Anwendungen des Nachrichtenverteilsystems ausgeführt werden, um den Betrieb des Nachrichtenverteilsystems möglichst wenig zu stören.

Es ist von Vorteil, wenn im Verfahren die Kommunikationstests und/oder die Anwendungen der Knoten im laufenden Betrieb des Nachrichtenverteilsystems abgeschaltet werden und bei Bedarf wieder zugeschaltet werden, um zum Beispiel unerwünschte Alarme des Systems bei Wartungsarbeiten zu unterdrücken.

Dies bietet beispielsweise große Vorteile bei Reparaturarbeiten am System oder Umbau einer Local Area Network (= LAN) Topologie. Vor Beginn einer solchen Maßnahme sollte der oben beschriebene überwachende Kommunikationstest deaktiviert werden, um die Alarmierung von Inkonsistenten während des Umbaus zu unterdrücken. Beispielsweise bei einem Umbau einer LAN Topologie muss der Aufbau nicht nur physikalisch verändert werden, sondern es muss auch der neue Systemaufbau auf dem Knoten administriert und angepasst werden. Der Knoten überprüft sofort die Konsistenz zwischen physikalischer Topologie und dem logischen Aufbau, den er hat, sobald die Prüfung bei ihm wieder aktiviert ist.

Im neuen Verfahren sollen einzelne Knoten, benachbarte Knoten und/oder Systemkomponenten bei Bedarf abgeschaltet werden können. Hierdurch können Routinetests der Redundanzeigenschaften der Redundanzwege des Systems überprüft werden, die diese Knoten und/oder Systemkomponenten beinhalten.

Optional kann der oder die abgeschalteten Knoten und/oder Systemkomponenten erst dann wieder für den Verkehr freigegeben werden, wenn diese Konsistenzprüfung erfolgreich war. Auf diese Weise hätte man im laufenden Betrieb keinerlei Einschränkung durch ein eventuell auftretendes Verkabelungsproblem.

Die Kommunikationstests können während des Systemstarts des Nachrichtenverteilsystems und routinemäßig unter Zuhilfenahme der Steuerschnittstellen vorgelagerter Systemkomponenten durchgeführt werden. Hierdurch wird der Betrieb des Nachrichtenverteilsystems durch die aktiven Kommunikationstests am wenigsten beeinträchtigt.

Im Folgenden wird die Erfindung anhand der bevorzugten Ausführungsbeispiele mit Hilfe der Figuren näher beschrieben, wobei darauf hingewiesen wird, dass nur die für das unmittelbare Verständnis der Erfindung wesentlichen Elemente gezeigt sind. Hierbei werden die folgenden Bezugszeichen verwendet: 1: erster Switch; 2: zweiter Switch; 3: erster Knoten; 3.1: Link erster Knoten zum ersten Switch; 3.2: Link erster Knoten zum zweiten Switch; 4: zweiter Knoten; 4.1: Link zweiter Knoten zum ersten Switch; 4.12: Falsche Verkabelung /Falscher Link des zweiten Knotens; 4.2: Link zweiter Knoten zum zweiten Switch; 5: dritter Knoten; 5.1: Link dritter Knoten zum ersten Switch; 5.2: Link dritter Knoten zum zweiten Switch; 6: vierter Knoten; 6.1: Link vierter Knoten zum ersten Switch; 6.2: Link vierter Knoten zum zweiten Switch; 7: erste Anwendung; 8: zweite Anwendung; 9: dritte Anwendung; 10: vierte Anwendung; 11: gedoppelter Crosslink zwischen erstem und zweitem Switch; 12: erster Router 13: zweiter Router.

Im Übrigen werden folgende Abkürzungen verwendet:
- ATM =: asynchronous transfer mode
- IP =: internet protocol
- LAN =: local area network
- MAC =: message authentication code
- VLAN =: very local area network.

Es zeigen im Einzelnen:
- Figur 1:: Redundante Kommunikationseinrichtungen, die korrekt verkabelt sind;
- Figur 2:: Zwei Switche einer redundanten Kommunikationseinrichtung, wobei ein Knoten zwischen den Switchen fehlerhaft verkabelt ist.

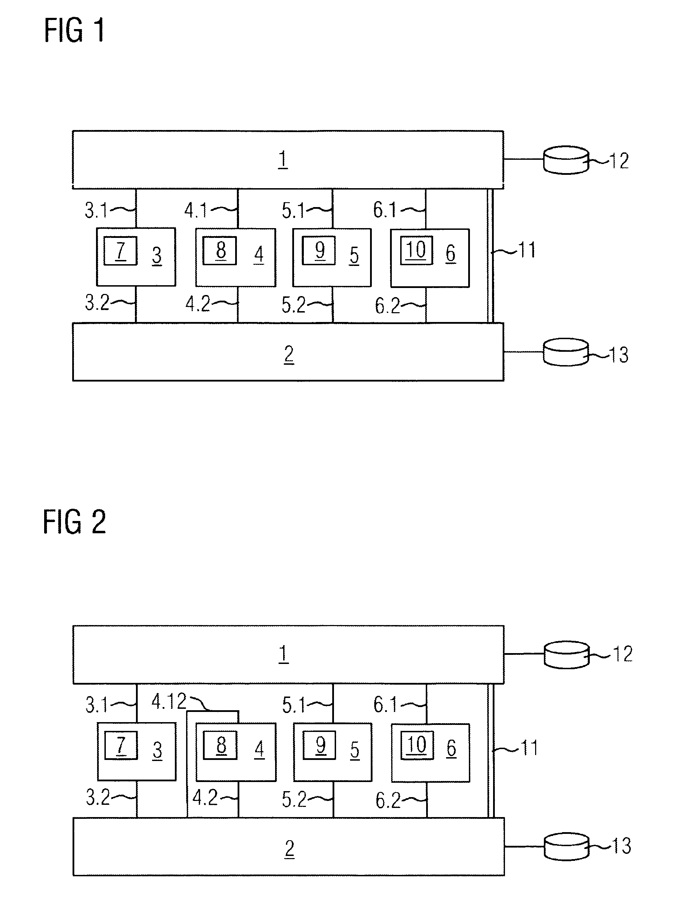

Die Figur 1 zeigt eine redundante Kommunikationseinrichtung, die korrekt verkabelt ist. Zwischen den Switchen 1 und 2 sind vier Knoten, mit den Bezugszeichen 3 bis 6 benannt, angeordnet, die über die Links 3.1, 4.1, 5.1, 6.1 und 3.2, 4.2, 5.2, 6.2 jeweils an den ersten und zweiten Switch 1 und 2 angebunden sind. Die Knoten 3 bis 6 können beispielsweise Computer sein. Auf den Knoten 3 bis 6 beziehungsweise über diese Knoten 3 bis 6 laufen verschiedene Anwendungen 7 bis 10. Weiterhin sind die beiden Switche 1 und 2 zur Absicherung über einen Crosslink 11 direkt miteinander verbunden.

Die Anbindung der Kommunikationseinrichtung an das externe Netz erfolgt über die Router 12 und 13. Durch IP Adressrekonfiguration kann man in dieser Konfiguration jeden Einzelfehler, zum Beispiel den Ausfall eines Links zwischen den Switchen und eines Knotens, den Ausfall eines Ethernet-Ports, oder den Ausfall eines gesamten Switches, beheben oder überbrücken. Fallen beispielsweise ein oder mehrere Ethernet Interfaces auf den Knoten 3 bis 6 aus, so kann die Kommunikation über den gedoppelten Crosslink 11 weitergeführt werden.

Diese Redundanz entfällt, wenn beide Ethernet-Ports eines Knotens, verursacht durch falsche Verkabelung, am selben Switch 1 oder Switch 2 hängen. Dieser Fehler tritt aufgrund der redundanten Ausführung der Kommunikationseinrichtung allerdings erst dann zutage, wenn genau dieser Switch 1 oder 2 ausfällt. Ein Verkabelungsfehler dieser Art kann relativ leicht auftreten und verhindert dann unnötigerweise sämtliche Redundanzeigenschaften des Systems. In Figur 1 ist die Topologie der hochredundanten Konfiguration richtig verkabelt. Diese Konfiguration ist unter Zuhilfenahme von IP Adressenrekonfiguration von einem Ethernet-Port auf das andere resistent gegenüber allen Einzelfehlern der Hardware. Der (Nachrichten-)Verkehr hat immer einen Weg nach außen.

Die Figur 2 zeigt den gleichen redundanten Aufbau einer Kommunikationseinrichtung mit zwei Switches 1 und 2 der Figur 1, wobei im Unterschied zu Figur 1 die Verbindung des zweiten Knotens 4 an den Switch 1 nicht korrekt verkabelt ist. Die falsche Verkabelung / falsche Link 4.12 ist versehentlich auf den zweiten Switch 2 gelegt.

Der zweite Knoten 4 ist also mit beiden Links 4.2 und 4.12 an den zweiten Switch 2 angehängt. Dieser Fehler fällt im Normalbetrieb nicht auf, da der gesamte Kommunikationsverkehr über den Switch 2 läuft und beide Router 12 und 13 entweder über den direkten Weg oder den indirekten Weg über Crosslink 11 erreichbar sind. Fällt nun aber der zweite Switch 2 aus, so ist der zweite Knoten 4 vollständig isoliert, da er physikalisch keine Möglichkeit hat, den Verkehr über den Switch 1 zum Router zu schicken. Die Knoten 3, 5 und 6 sind beim Ausfall des Switches 2 immer noch über den ersten Switch 1 an den ersten Router angebunden.

Dieser (Verkabelungs-)Fehler 4.12 des zweiten Knoten 4 kann mit Hilfe des neuen Verfahrens nun leicht detektiert und dann behoben werden. In einer möglichen Ausführungsvariante des neuen Verfahrens kann eine Anwendung, hier Anwendung 4 auf den Switchen 1 und 2 die Bridge-Tables (= Verbindungstabellen) abfragen. Sie erkennt dann, dass die Netzwerkadressen vom zweiten Knoten 4 am Switch 1 gar nicht und am Switch 2 doppelt vorhanden ist und kann diesen Sachverhalt alarmieren. Es kann dann die falsche Verkabelung / der falsche Link 4.12 manuell behoben werden.

Dies ist natürlich nur ein einfaches Beispiel, um das Prinzip zu demonstrieren. Die Topologien können jedoch beliebig komplex werden, indem man zum Beispiel kaskadierende Switche und mehr als zwei Interfaces/Ethernet-Ports pro Host hat, wo dann natürlich die Wahrscheinlichkeit einer fehlerhaften Konfiguration zunimmt.

Tritt ein Fehler auf, wird die Auswirkung der Falschverkabelung sofort in die Entscheidung zur Ersatzschaltung/Alarmierung einbezogen, was die Verfügbarkeit der Anordnung erhöht.

Die Topologie wird beim Systemstart bekannt und ist dann administrierbar. Bei Änderungen der Topologie erfolgt eine Aktualisierung des logischen Models über eine Bedienschnittstelle. Da bei Wartungsarbeiten falsche Alarme gesendet werden würden, sollte die Alarmierung beziehungsweise routinemäßige Überprüfung über eine Bedienschnittstelle abschaltbar sein.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

## Patentansprüche

1. Verfahren zur Fehlererkennung in einem paketbasierten Nachrichtenverteilsystem, wobei Nachrichten über mehrere Knoten (3, 4, 5, 6) und weitere Systemkomponenten (1, 2, 11, 12, 13) verteilt werden und jeder Knoten (3, 4, 5, 6) mindestens zwei adressierbare Schnittstellen aufweist, und zur Systemsicherheit die Nachrichtenverteilerwege redundant aufgebaut sind und beim Ausfall einer oder mehrerer Verbindungen der Knoten (3, 4, 5, 6) und/oder Systemkomponenten (1, 2, 11, 12, 13) im Nachrichtenverteilsystem Redundanzwege vorhanden sind und die Topologie des Nachrichtenverteilsystems den Knoten (3, 4, 5, 6) bekannt ist,
**dadurch gekennzeichnet,**
**dass** die Knoten (3, 4, 5, 6) durch Kommunikationstests die Erreichbarkeit der weiteren Knoten (3, 4, 5, 6) verifizieren, die Knoten (3, 4, 5, 6) zwischengelagerte Systemkomponenten (1, 2, 11, 12, 13) über vorhandene Schnittstellen (3.1 bis 6.1 und 3.2 bis 6.2) bezüglich deren Verbindungsstatus mit anderen Knoten (3, 4, 5, 6) und/oder Systemkomponenten (1, 2, 11, 12, 13) abfragen, die Knoten (3, 4, 5, 6) eventuell vorhandene Fehlkonfigurationen, physische Fehler (4.12) und/oder fehlende Redundanzwege des Nachrichtenverteilsystems signalisieren.

2. Verfahren nach dem voranstehenden Anspruch 1,
**dadurch gekennzeichnet,**
**dass** das Nachrichtenverteilsystem ein IP basiertes Nachrichtenverteilsystem, ein LAN oder ein VLAN ist, wobei jedem Knoten (3, 4, 5, 6) mindestens zwei eineindeutige Netzwerkadressen, IP- und/oder MAC-Adressen, zugeordnet werden.

3. Verfahren nach einem der voranstehenden Ansprüche 1 und 2,
**dadurch gekennzeichnet,**
**dass** die Daten, die die Topologie beschreiben, über eine Bedienschnittstelle verändert werden.

4. Verfahren nach einem der voranstehenden Ansprüche 1 bis 3,
**dadurch gekennzeichnet,**
**dass** vorhandene Fehlkonfigurationen des Nachrichtenverteilsystems nach Erkennung automatisch korrigiert werden.

5. Verfahren nach dem voranstehenden Anspruch 4,
**dadurch gekennzeichnet,**
**dass** im Falle einer physischen Falschverkabelung eines oder mehrerer Knoten (3, 4, 5, 6) und/oder der Systemkomponenten (1, 2, 11, 12, 13) die Konfigurationsdaten des Nachrichtenverteilsystems automatisch ohne Bedienereingriff modifiziert werden.

6. Verfahren nach einem der voranstehenden Ansprüche 1 bis 5,
**dadurch gekennzeichnet,**
**dass** der Verbindungsstatus der Knoten (3, 4, 5, 6) und/oder Systemkomponenten (1, 2, 11, 12, 13) in Verbindungstabellen (= Bridge-Tables) hinterlegt ist und die Knoten (3, 4, 5, 6) signalisieren, wenn sie ihre Netzwerkadresse in den Verbindungstabellen benachbarten Systemkomponenten gar nicht oder mehrfach vorfinden.

7. Verfahren nach einem der voranstehenden Ansprüche 1 bis 6,
**dadurch gekennzeichnet,**
**dass** bei Bedarf, bei Wartungsarbeiten, Um- und Erweiterungsbaumaßnahmen, die Signalisierung und Änderung der Fehlkonfiguration deaktiviert wird.

8. Verfahren nach einem der voranstehenden Ansprüche 1 bis 7,
**dadurch gekennzeichnet,**
**dass** zur Fehlererkennung und Verifikation der durch die Topologie verlangten Verschaltung und Konfiguration einzelne Knoten (3, 4, 5, 6) und/oder zwischengelagerte Systemkomponenten (1, 2, 11, 12, 13) abgeschaltet werden.

9. Verfahren nach Anspruch 6,
**dadurch gekennzeichnet,**
**dass** auf den Knoten (3, 4, 5, 6) Anwendungen (7, 8, 9, 10) ausgeführt werden, die die Bridge-Tables der benachbarten Systemkomponenten (1, 2) und die darin tatsächlich vorhandenen Netzwerkadressen überprüfen.

10. Verfahren nach Anspruch 9,
**dadurch gekennzeichnet,**
**dass** die Kommunikationstests und/oder die Anwendungen (7, 8, 9, 10) der Knoten (3, 4, 5, 6) im laufenden Betrieb des Nachrichtenverteilsystems abgeschaltet und bei Bedarf wieder zugeschaltet werden.

11. Verfahren nach einem der voranstehenden Ansprüche 1 bis 10,
**dadurch gekennzeichnet,**
**dass** die Kommunikationstests während des Systemstarts des Nachrichtenverteilsystems oder dem Anlauf weiterer Systemkomponenten (1, 2, 11, 12, 13) durchgeführt werden.

12. Verfahren nach einem der voranstehenden Ansprüche 1 bis 11,
**dadurch gekennzeichnet,**
**dass** die Kommunikationstests routinemäßig unter Zuhilfenahme der Steuerschnittstellen vorgelagerter Systemkomponenten (1, 2, 11, 12, 13) durchgeführt werden.

## Claims

1. Method for error detection in a packet-based message distribution system, wherein messages are distributed over several nodes (3, 4, 5, 6) and other system components (1, 2, 11, 12, 13) and each node (3, 4, 5, 6) has at least two addressable interfaces, and, for the purpose of system reliability, the message distributor paths are redundantly configured and in the case of the failure of one or more connections of the nodes (3, 4, 5, 6) and/or system components (1, 2, 11, 12, 13), there are redundant paths in the message distribution system and the topology of the message distribution system is known to the nodes (3, 4, 5, 6), **characterized in that** the nodes (3, 4, 5, 6) verify the availability of the other nodes (3, 4, 5, 6) by communication tests, the nodes (3, 4, 5, 6) interrogate intermediate system components (1, 2, 11, 12, 13) via existing interfaces (3.1 to 6.1 and 3.2 to 6.2) with respect to their connection status with other nodes (3, 4, 5, 6) and/or system components (1, 2, 11, 12, 13), the nodes (3, 4, 5, 6) signal any misconfigurations, physical errors (4.12) and/or missing redundant paths of the message distribution system which may be present.

2. Method according to the preceding Claim 1, **characterized in that** the message distribution system is an IP-based message distribution system, a LAN or a VLAN, wherein at least two network addresses, IP and/or MAC addresses, which are correlated one-to-one, are allocated to each node (3, 4, 5, 6).

3. Method according to one of the preceding Claims 1 and 2, **characterized in that** the data which describes the topology are changed via an operating interface.

4. Method according to one of the preceding Claims 1 to 3, **characterized in that** existing misconfigurations of the message distribution system are automatically corrected after their detection.

5. Method according to the preceding Claim 4, **characterized in that**, in the case of a wrong physical cabling of one or more nodes (3, 4, 5, 6) and/or of the system components (1, 2, 11, 12, 13), the configuration data of the message distribution system are automatically modified without operator intervention.

6. Method according to one of the preceding Claims 1 to 5, **characterized in that** the connection status of the nodes (3, 4, 5, 6) and/or system components (1, 2, 11, 12, 13) is deposited in bridge tables and the nodes (3, 4, 5, 6) signal when they do not at all find their network address in the bridge tables of adjacent system components, or several times.

7. Method according to one of the preceding Claims 1 to 6, **characterized in that**, if necessary, the signalling and altering of the misconfiguration is deactivated in the case of maintenance work, reconstruction and extension measures.

8. Method according to one of the preceding Claims 1 to 7, **characterized in that** individual nodes (3, 4, 5, 6) and/or intermediate system components (1, 2, 11, 12, 13) are disconnected for the purpose of error detection and verification of the interconnection and configuration demanded by the topology.

9. Method according to Claim 6, **characterized in that** on the nodes (3, 4, 5, 6), applications (7, 8, 9, 10) are executed which check the bridge tables of the adjacent system components (1, 2) and the network addresses actually present therein.

10. Method according to Claim 9, **characterized in that** the communication tests and/or the applications (7, 8, 9, 10) of the nodes (3, 4, 5, 6) are switched off in running operation of the message distribution system and are switched in again where necessary.

11. Method according to one of the preceding Claims 1 to 10, **characterized in that** the communication tests are carried out during the system start of the message distribution system or the start-up of other system components (1, 2, 11, 12, 13).

12. Method according to one of the preceding Claims 1 to 11, **characterized in that** the communication tests are routinely carried out with the assistance of the control interfaces of upstream system components (1, 2, 11, 12, 13).

## Revendications

1. Procédé de détection d'erreurs dans un système de distribution de messages par paquets, des messages étant distribués par l'intermédiaire de plusieurs noeuds (3, 4, 5, 6) et d'autres composants système (1, 2, 11, 12, 13) et chaque noeud (3, 4, 5, 6) présentant au moins deux interfaces adressables et les voies de distribution de messages étant de conception redondante aux fins de la sécurité du système et des voies redondantes étant présentes en cas de défaillance d'une ou de plusieurs liaisons des noeuds (3, 4, 5, 6) et/ou des composants système (1, 2, 11, 12, 13) dans le système de distribution de messages et la topologie du système de distribution de messages étant connue des noeuds (3, 4, 5, 6), **caractérisé en ce que** les noeuds (3, 4, 5, 6) vérifient l'accessibilité des autres noeuds (3, 4, 5, 6) par des tests de communication, les noeuds (3, 4, 5, 6) interrogent des composants système intermédiaires (1, 2, 11, 12, 13) par l'intermédiaire d'interfaces présentes (3.1 à 6.1 et 3.2 à 6.2) en ce qui concerne leur statut de liaison avec d'autres noeuds (3, 4, 5, 6) et/ou composants système (1, 2, 11, 12, 13), les noeuds (3, 4, 5, 6) signalent la présence éventuelle de configurations erronées, d'erreurs physiques (4.12) et/ou de voies redondantes manquantes du système de distribution de messages.

2. Procédé selon la revendication précédente 1, **caractérisé en ce que** le système de distribution de messages est un système de distribution de messages basé sur IP, un LAN ou un VLAN, au moins deux adresses réseau bi-univoques, adresses IP et/ou adresses MAC étant associées à chaque noeud (3, 4, 5, 6).

3. Procédé selon l'une des revendications précédentes 1 et 2, **caractérisé en ce que** les données qui décrivent la topologie sont modifiées par l'intermédiaire d'une interface de commande.

4. Procédé selon l'une des revendications précédentes 1 à 3, **caractérisé en ce que** des configurations erronées présentes dans le système de distribution de messages sont corrigées automatiquement après leur détection.

5. Procédé selon la revendication précédente 4, **caractérisé en ce que** les données de configuration du système de distribution de messages sont modifiées automatiquement sans intervention de l'opérateur dans le cas d'un mauvais câblage physique d'un ou de plusieurs noeuds (3, 4, 5, 6) et/ou des composants système (1, 2, 11, 12, 13).

6. Procédé selon l'une des revendications précédentes 1 à 5, **caractérisé en ce que** le statut de liaison des noeuds (3, 4, 5, 6) et/ou des composants système (1, 2, 11, 12, 13) est déposé dans des tables de liaisons (bridge tables) et les noeuds (3, 4, 5, 6) signalent s'ils ne trouvent pas du tout, ou trouvent plusieurs fois leurs adresses réseau dans les tables de liaisons de composants système voisins.

7. Procédé selon l'une des revendications précédentes 1 à 6, **caractérisé en ce que**, si besoin est, lors de travaux de maintenance, de mesures de transformation et d'élargissement, il y a désactivation de la signalisation et de la modification de la configuration erronée.

8. Procédé selon l'une des revendications précédentes 1 à 7, **caractérisé en ce que** des noeuds individuels (3, 4, 5, 6) et/ou des composants système intermédiaires (1, 2, 11, 12, 13) sont déconnectés aux fins de la détection d'erreurs et de la vérification du câblage et de la configuration exigés par la topologie.

9. Procédé selon la revendication 6, **caractérisé en ce que** sont exécutées, sur les noeuds (3, 4, 5, 6), des applications (7, 8, 9, 10) qui vérifient les bridge tables des composants système voisins (1, 2) et les adresses réseau qui y sont effectivement présentes.

10. Procédé selon la revendication 9, **caractérisé en ce que** les tests de communication et/ou les applications (7, 8, 9, 10) des noeuds (3, 4, 5, 6) sont déconnectés pendant le fonctionnement du système de distribution de messages et remis en marche en cas de besoin.

11. Procédé selon l'une des revendications précédentes 1 à 10, **caractérisé en ce que** les tests de communication sont effectués pendant le lancement du système de distribution de messages ou le démarrage d'autres composants système (1, 2, 11, 12, 13).

12. Procédé selon l'une des revendications précédentes 1 à 11, **caractérisé en ce que** les tests de communication sont effectués de manière routinière à l'aide des interfaces de commande de composants système (1, 2, 11, 12, 13) en amont.
